# EUROPEAN PATENT APPLICATION

(11) **EP 4 407 414 A1**
(43) Date of publication of application: **31.07.2024**
(21) Application number: 24151864.6
(22) Date of filing: 15.01.2024
(51) Int. Cl.: G06F 3/01, G06F 3/16, G06T 19/00

(54) **DIGITAL ASSISTANT PLACEMENT IN EXTENDED REALITY**

(30) Priority: 24.01.2023 US 202363440803 P; 06.11.2023 US 202318503041
(71) Applicant: Apple Inc., Cupertino, CA 95014 (US)
(72) Inventor: KRIVORUCHKO, Evgenii, Cupertino, 95014 (US); MOON, Jay, Cupertino, 95014 (US); STREJA, Lynn I., Cupertino, 95014 (US); WEINBERG, Garrett L., Cupertino, 95014 (US); MARI, Pedro, Cupertino, 95014 (US)
(74) Representative: Zacco Denmark A/S

(57) **Abstract**

An example process includes: receiving a first input corresponding to a request to initiate a digital assistant; and in response to receiving the first input, initiating a first instance of a digital assistant session, including: in accordance with a determination that a set of display criteria is satisfied, displaying a digital assistant indicator at a first location in an extended reality (XR) environment; and in accordance with a determination that the set of display criteria is not satisfied, displaying the digital assistant indicator at a second location in the XR environment, wherein the second location is different from the first location.

## Description

### Field

This relates to systems and techniques for determining digital assistant placement in an extended reality environment.

### Background

Digital assistants can provide a beneficial interface between human users and electronic devices. Such assistants can allow users to interact with devices or systems using natural language in spoken and/or text forms. For example, a user can provide a speech input containing a user request to a digital assistant operating on an electronic device. The digital assistant can interpret the user's intent from the speech input and operationalize the user's intent into tasks. The tasks can then be performed by executing one or more services of the electronic device, and a relevant output responsive to the user request can be returned to the user.

### Summary

Example methods are disclosed herein. An example method includes at an electronic device having one or more processors and memory: while providing an extended reality (XR) environment: receiving a first input corresponding to a request to initiate a digital assistant; in response to receiving the first input, initiating a first instance of a digital assistant session; in accordance with initiating the first instance of the digital assistant session, displaying a digital assistant indicator at a first location in the XR environment; while providing a first view of the XR environment, dismissing the first instance of the digital assistant session, including ceasing to display the digital assistant indicator at the first location in the first view; and after dismissing the first instance of the digital assistant session: receiving a second input corresponding to a request to initiate the digital assistant; and in response to receiving the second input and while providing a second view of the XR environment, initiating a second instance of a digital assistant session, including: in accordance with a determination that a difference between the first view and the second view satisfies a set of criteria, displaying the digital assistant indicator at the first location in the second view.

Example non-transitory computer-readable media are disclosed herein. An example non-transitory computer-readable storage medium stores one or more programs. The one or more programs comprise instructions, which when executed by one or more processors of an electronic device, cause the electronic device to: while providing an extended reality (XR) environment: receive a first input corresponding to a request to initiate a digital assistant; in response to receiving the first input, initiate a first instance of a digital assistant session; in accordance with initiating the first instance of the digital assistant session, display a digital assistant indicator at a first location in the XR environment; while providing a first view of the XR environment, dismiss the first instance of the digital assistant session, including ceasing to display the digital assistant indicator at the first location in the first view; and after dismissing the first instance of the digital assistant session: receive a second input corresponding to a request to initiate the digital assistant; and in response to receiving the second input and while providing a second view of the XR environment, initiate a second instance of a digital assistant session, including: in accordance with a determination that a difference between the first view and the second view satisfies a set of criteria, displaying the digital assistant indicator at the first location in the second view.

Example electronic devices are disclosed herein. An example electronic device comprises one or more processors; a memory; and one or more programs, where the one or more programs are stored in the memory and configured to be executed by the one or more processors, the one or more programs including instructions for: while providing an extended reality (XR) environment: receiving a first input corresponding to a request to initiate a digital assistant; in response to receiving the first input, initiating a first instance of a digital assistant session; in accordance with initiating the first instance of the digital assistant session, displaying a digital assistant indicator at a first location in the XR environment; while providing a first view of the XR environment, dismissing the first instance of the digital assistant session, including ceasing to display the digital assistant indicator at the first location in the first view; and after dismissing the first instance of the digital assistant session: receiving a second input corresponding to a request to initiate the digital assistant; and in response to receiving the second input and while providing a second view of the XR environment, initiating a second instance of a digital assistant session, including: in accordance with a determination that a difference between the first view and the second view satisfies a set of criteria, displaying the digital assistant indicator at the first location in the second view.

Example methods are disclosed herein. An example method includes at an electronic device having one or more processors and memory: receiving a first input corresponding to a request to initiate a digital assistant; and in response to receiving the first input, initiating a first instance of a digital assistant session, including: in accordance with a determination that a set of display criteria is satisfied, displaying a digital assistant indicator at a first location in an extended reality (XR) environment; and in accordance with a determination that the set of display criteria is not satisfied, displaying the digital assistant indicator at a second location in the XR environment, wherein the second location is different from the first location.

Example non-transitory computer-readable media are disclosed herein. An example non-transitory computer-readable storage medium stores one or more programs. The one or more programs comprise instructions, which when executed by one or more processors of an electronic device, cause the electronic device to: receive a first input corresponding to a request to initiate a digital assistant; and in response to receiving the first input, initiate a first instance of a digital assistant session, including: in accordance with a determination that a set of display criteria is satisfied, displaying a digital assistant indicator at a first location in an extended reality (XR) environment; and in accordance with a determination that the set of display criteria is not satisfied, displaying the digital assistant indicator at a second location in the XR environment, wherein the second location is different from the first location.

Example electronic devices are disclosed herein. An example electronic device comprises one or more processors; a memory; and one or more programs, where the one or more programs are stored in the memory and configured to be executed by the one or more processors, the one or more programs including instructions for: receiving a first input corresponding to a request to initiate a digital assistant; and in response to receiving the first input, initiating a first instance of a digital assistant session, including: in accordance with a determination that a set of display criteria is satisfied, displaying a digital assistant indicator at a first location in an extended reality (XR) environment; and in accordance with a determination that the set of display criteria is not satisfied, displaying the digital assistant indicator at a second location in the XR environment, wherein the second location is different from the first location.

Displaying the digital assistant (DA) indicator at different locations based on whether a set of criteria is satisfied may improve the accuracy and efficiency of user interaction with DAs in XR environments. In particular, to interact with (e.g., issue a request to) a DA, a user may select (e.g., via gaze input or gesture input) a displayed DA indicator. Accordingly, the techniques discussed herein may display the DA indicator at locations that facilitate user-interaction with the DA. For example, if the set of criteria is satisfied, the device can display the DA indicator at a preferred location previously selected by the user, thereby reducing user inputs otherwise required to display the DA indicator at the preferred location. Further, displaying the DA indicator at the user-preferred location may prevent the DA indicator from obscuring other elements of user interest in the XR environment. If the set of criteria is not satisfied, displaying the DA indicator at the previously selected location may be inappropriate, e.g., because the previously selected location is not in the user's current view and/or because if placed at the previously selected location, the DA indicator is too far away from the user for accurate interaction with the DA. The device can thus display the DA indicator at a default location for quick and accurate interaction with the digital assistant. In this manner, the user-device interaction is made more accurate and efficient (e.g., by reducing user mistakes when interacting with the device, by reducing the number of inputs required to perform desired tasks, by reducing the number of inputs required to interact with the device, by reducing user inputs required to move the DA indicator to a preferred location), which additionally, reduces power usage and improves device battery life by enabling quicker and more efficient device usage.

### Brief Description of Figures

FIGS. 1A-1B depict exemplary systems for use in various computer-generated reality technologies, including virtual reality and mixed reality.
FIG. 2 illustrates a block diagram of a digital assistant, according to various examples.
FIGS. 3A-3H illustrate techniques for placing a digital assistant indicator, according to various examples.
FIGS. 4A-4B illustrate a process for placing a digital assistant indicator, according to various examples.
FIGS. 5A-5B illustrate a process for placing a digital assistant indicator, according to various examples.

### Description

Various examples of electronic systems and techniques for using such systems in relation to various computer-generated reality technologies are described.

A physical environment refers to a physical world that people can sense and/or interact with without aid of electronic systems. Physical environments, such as a physical park, include physical articles, such as physical trees, physical buildings, and physical people. People can directly sense and/or interact with the physical environment, such as through sight, touch, hearing, taste, and smell.

In contrast, an extended reality (XR) environment refers to a wholly or partially simulated environment that people sense and/or interact with via an electronic system. In XR, a subset of a person's physical motions, or representations thereof, are tracked, and, in response, one or more characteristics of one or more virtual objects simulated in the XR environment are adjusted in a manner that comports with at least one law of physics. For example, a XR system may detect a person's head turning and, in response, adjust graphical content and an acoustic field presented to the person in a manner similar to how such views and sounds would change in a physical environment. In some situations (e.g., for accessibility reasons), adjustments to characteristic(s) of virtual object(s) in a XR environment may be made in response to representations of physical motions (e.g., vocal commands).

A person may sense and/or interact with a XR object using any one of their senses, including sight, sound, touch, taste, and smell. For example, a person may sense and/or interact with audio objects that create 3D or spatial audio environment that provides the perception of point audio sources in 3D space. In another example, audio objects may enable audio transparency, which selectively incorporates ambient sounds from the physical environment with or without computer-generated audio. In some XR environments, a person may sense and/or interact only with audio objects.

Examples of XR include virtual reality and mixed reality.

A virtual reality (VR) environment refers to a simulated environment that is designed to be based entirely on computer-generated sensory inputs for one or more senses. A VR environment comprises a plurality of virtual objects with which a person may sense and/or interact. For example, computer-generated imagery of trees, buildings, and avatars representing people are examples of virtual objects. A person may sense and/or interact with virtual objects in the VR environment through a simulation of the person's presence within the computer-generated environment, and/or through a simulation of a subset of the person's physical movements within the computer-generated environment.

In contrast to a VR environment, which is designed to be based entirely on computer-generated sensory inputs, a mixed reality (MR) environment refers to a simulated environment that is designed to incorporate sensory inputs from the physical environment, or a representation thereof, in addition to including computer-generated sensory inputs (e.g., virtual objects). On a virtuality continuum, a mixed reality environment is anywhere between, but not including, a wholly physical environment at one end and virtual reality environment at the other end.

In some MR environments, computer-generated sensory inputs may respond to changes in sensory inputs from the physical environment. Also, some electronic systems for presenting an MR environment may track location and/or orientation with respect to the physical environment to enable virtual objects to interact with real objects (that is, physical articles from the physical environment or representations thereof). For example, a system may account for movements so that a virtual tree appears stationery with respect to the physical ground.

Examples of mixed realities include augmented reality and augmented virtuality.

An augmented reality (AR) environment refers to a simulated environment in which one or more virtual objects are superimposed over a physical environment, or a representation thereof. For example, an electronic system for presenting an AR environment may have a transparent or translucent display through which a person may directly view the physical environment. The system may be configured to present virtual objects on the transparent or translucent display, so that a person, using the system, perceives the virtual objects superimposed over the physical environment. Alternatively, a system may have an opaque display and one or more imaging sensors that capture images or video of the physical environment, which are representations of the physical environment. The system composites the images or video with virtual objects, and presents the composition on the opaque display. A person, using the system, indirectly views the physical environment by way of the images or video of the physical environment, and perceives the virtual objects superimposed over the physical environment. As used herein, a video of the physical environment shown on an opaque display is called "pass-through video," meaning a system uses one or more image sensor(s) to capture images of the physical environment, and uses those images in presenting the AR environment on the opaque display. Further alternatively, a system may have a projection system that projects virtual objects into the physical environment, for example, as a hologram or on a physical surface, so that a person, using the system, perceives the virtual objects superimposed over the physical environment.

An augmented reality environment also refers to a simulated environment in which a representation of a physical environment is transformed by computer-generated sensory information. For example, in providing pass-through video, a system may transform one or more sensor images to impose a select perspective (e.g., viewpoint) different than the perspective captured by the imaging sensors. As another example, a representation of a physical environment may be transformed by graphically modifying (e.g., enlarging) portions thereof, such that the modified portion may be representative but not photorealistic versions of the originally captured images. As a further example, a representation of a physical environment may be transformed by graphically eliminating or obfuscating portions thereof.

An augmented virtuality (AV) environment refers to a simulated environment in which a virtual or computer generated environment incorporates one or more sensory inputs from the physical environment. The sensory inputs may be representations of one or more characteristics of the physical environment. For example, an AV park may have virtual trees and virtual buildings, but people with faces photorealistically reproduced from images taken of physical people. As another example, a virtual object may adopt a shape or color of a physical article imaged by one or more imaging sensors. As a further example, a virtual object may adopt shadows consistent with the position of the sun in the physical environment.

There are many different types of electronic systems that enable a person to sense and/or interact with various XR environments. Examples include head mounted systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mounted system may have one or more speaker(s) and an integrated opaque display. Alternatively, a head mounted system may be configured to accept an external opaque display (e.g., a smartphone). The head mounted system may incorporate one or more imaging sensors to capture images or video of the physical environment, and/or one or more microphones to capture audio of the physical environment. Rather than an opaque display, a head mounted system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one embodiment, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

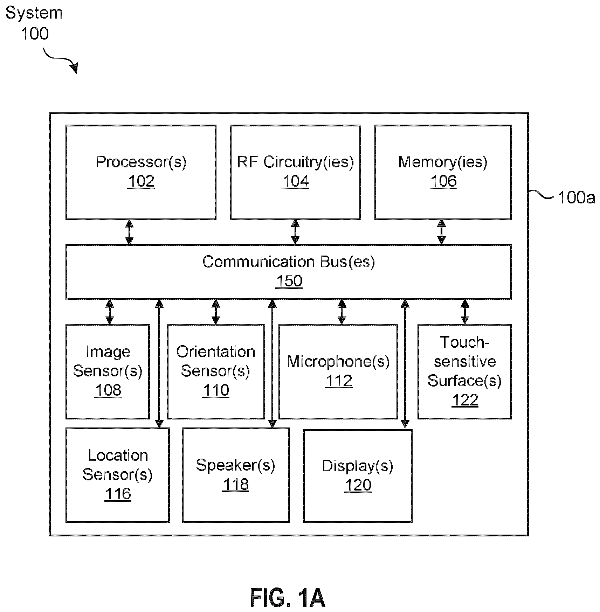

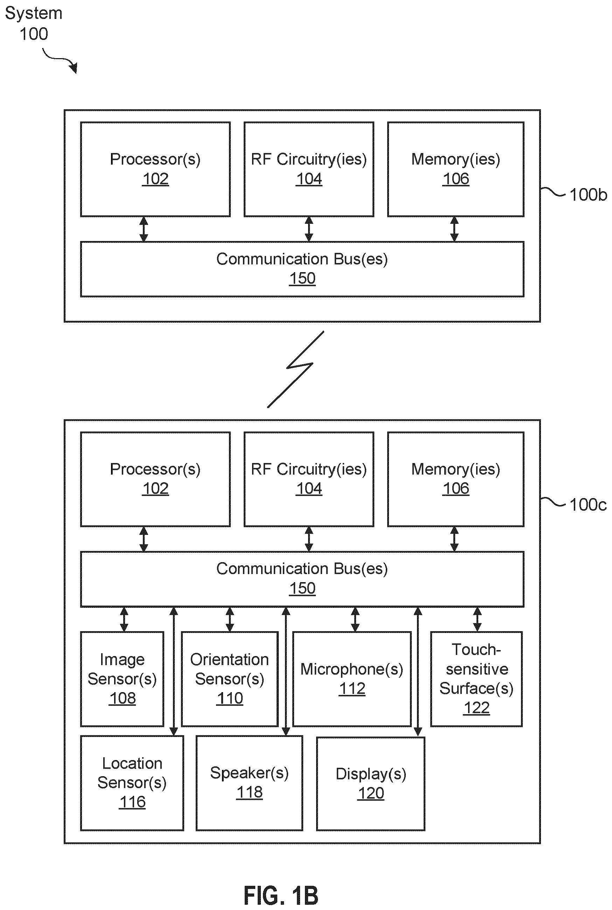

FIG. 1A and FIG. 1B depict exemplary system 100 for use in various computer-generated reality technologies.

In some examples, as illustrated in FIG. 1A, system 100 includes device 100a. Device 100a includes various components, such as processor(s) 102, RF circuitry(ies) 104, memory(ies) 106, image sensor(s) 108, orientation sensor(s) 110, microphone(s) 112, location sensor(s) 116, speaker(s) 118, display(s) 120, and touch-sensitive surface(s) 122. These components optionally communicate over communication bus(es) 150 of device 100a.

In some examples, elements of system 100 are implemented in a base station device (e.g., a computing device, such as a remote server, mobile device, or laptop) and other elements of the system 100 are implemented in a head-mounted display (HMD) device designed to be worn by the user, where the HMD device is in communication with the base station device. In some examples, device 100a is implemented in a base station device or a HMD device.

As illustrated in FIG. 1B, in some examples, system 100 includes two (or more) devices in communication, such as through a wired connection or a wireless connection. First device 100b (e.g., a base station device) includes processor(s) 102, RF circuitry(ies) 104, and memory(ies) 106. These components optionally communicate over communication bus(es) 150 of device 100b. Second device 100c (e.g., a head-mounted device) includes various components, such as processor(s) 102, RF circuitry(ies) 104, memory(ies) 106, image sensor(s) 108, orientation sensor(s) 110, microphone(s) 112, location sensor(s) 116, speaker(s) 118, display(s) 120, and touch-sensitive surface(s) 122. These components optionally communicate over communication bus(es) 150 of device 100c.

In some examples, system 100 is a mobile device. In some examples, system 100 is a head-mounted display (HMD) device. In some examples, system 100 is a wearable HUD device.

System 100 includes processor(s) 102 and memory(ies) 106. Processor(s) 102 include one or more general processors, one or more graphics processors, and/or one or more digital signal processors. In some examples, memory(ies) 106 are one or more non-transitory computer-readable storage mediums (e.g., flash memory, random access memory) that store computer-readable instructions configured to be executed by processor(s) 102 to perform the techniques described below.

System 100 includes RF circuitry(ies) 104. RF circuitry(ies) 104 optionally include circuitry for communicating with electronic devices, networks, such as the Internet, intranets, and/or a wireless network, such as cellular networks and wireless local area networks (LANs). RF circuitry(ies) 104 optionally includes circuitry for communicating using near-field communication and/or short-range communication, such as Bluetooth^{®}.

System 100 includes display(s) 120. In some examples, display(s) 120 include a first display (e.g., a left eye display panel) and a second display (e.g., a right eye display panel), each display for displaying images to a respective eye of the user. Corresponding images are simultaneously displayed on the first display and the second display. Optionally, the corresponding images include the same virtual objects and/or representations of the same physical objects from different viewpoints, resulting in a parallax effect that provides a user with the illusion of depth of the objects on the displays. In some examples, display(s) 120 include a single display. Corresponding images are simultaneously displayed on a first area and a second area of the single display for each eye of the user. Optionally, the corresponding images include the same virtual objects and/or representations of the same physical objects from different viewpoints, resulting in a parallax effect that provides a user with the illusion of depth of the objects on the single display.

In some examples, system 100 includes touch-sensitive surface(s) 122 for receiving user inputs, such as tap inputs and swipe inputs. In some examples, display(s) 120 and touch-sensitive surface(s) 122 form touch-sensitive display(s).

System 100 includes image sensor(s) 108. Image sensors(s) 108 optionally include one or more visible light image sensor, such as charged coupled device (CCD) sensors, and/or complementary metal-oxide-semiconductor (CMOS) sensors operable to obtain images of physical objects from the real environment. Image sensor(s) also optionally include one or more infrared (IR) sensor(s), such as a passive IR sensor or an active IR sensor, for detecting infrared light from the real environment. For example, an active IR sensor includes an IR emitter, such as an IR dot emitter, for emitting infrared light into the real environment. Image sensor(s) 108 also optionally include one or more event camera(s) configured to capture movement of physical objects in the real environment. Image sensor(s) 108 also optionally include one or more depth sensor(s) configured to detect the distance of physical objects from system 100. In some examples, system 100 uses CCD sensors, event cameras, and depth sensors in combination to detect the physical environment around system 100. In some examples, image sensor(s) 108 include a first image sensor and a second image sensor. The first image sensor and the second image sensor are optionally configured to capture images of physical objects in the real environment from two distinct perspectives. In some examples, system 100 uses image sensor(s) 108 to receive user inputs, such as hand gestures. In some examples, system 100 uses image sensor(s) 108 to detect the position and orientation of system 100 and/or display(s) 120 in the real environment. For example, system 100 uses image sensor(s) 108 to track the position and orientation of display(s) 120 relative to one or more fixed objects in the real environment.

In some examples, system 100 includes microphones(s) 112. System 100 uses microphone(s) 112 to detect sound from the user and/or the real environment of the user. In some examples, microphone(s) 112 includes an array of microphones (including a plurality of microphones) that optionally operate in tandem, such as to identify ambient noise or to locate the source of sound in space of the real environment.

System 100 includes orientation sensor(s) 110 for detecting orientation and/or movement of system 100 and/or display(s) 120. For example, system 100 uses orientation sensor(s) 110 to track changes in the position and/or orientation of system 100 and/or display(s) 120, such as with respect to physical objects in the real environment. Orientation sensor(s) 110 optionally include one or more gyroscopes and/or one or more accelerometers.

As used herein, a virtual object is viewpoint-locked when a device displays the virtual object at the same location and/or position in the viewpoint of the user, even as the viewpoint of the user shifts (e.g., changes). In examples where the device is a head-mounted device, the viewpoint of the user is locked to the forward facing direction of the user's head (e.g., the viewpoint of the user is at least a portion of the field-of-view of the user when the user is looking straight ahead); thus, the viewpoint of the user remains fixed even as the user's gaze is shifted, without moving the user's head. In examples where the device has a display that can be repositioned with respect to the user's head, the viewpoint of the user is the view that is being presented to the user on the display. For example, a viewpoint-locked virtual object that is displayed in the upper left corner of the viewpoint of the user, when the viewpoint of the user is in a first orientation (e.g., with the user's head facing north) continues to be displayed in the upper left corner of the viewpoint of the user, even as the viewpoint of the user changes to a second orientation (e.g., with the user's head facing west). In other words, the location and/or position at which the viewpoint-locked virtual object is displayed in the viewpoint of the user is independent of the user's position and/or orientation in the physical environment. In examples in which the device is a head-mounted device, the viewpoint of the user is locked to the orientation of the user's head, such that the virtual object is also referred to as a "head-locked virtual object."

As used herein, a virtual object is environment-locked (alternatively, "world-locked") when a device displays the virtual object at a location and/or position in the viewpoint of the user that is based on (e.g., selected in reference to and/or anchored to) a location and/or object in the three-dimensional environment (e.g., a physical environment or a virtual environment). As the viewpoint of the user shifts, the location and/or object in the environment relative to the viewpoint of the user changes, which results in the environment-locked virtual object being displayed at a different location and/or position in the viewpoint of the user. For example, an environment-locked virtual object that is locked onto a tree that is immediately in front of a user is displayed at the center of the viewpoint of the user. When the viewpoint of the user shifts to the right (e.g., the user's head is turned to the right) so that the tree is now left-of-center in the viewpoint of the user (e.g., the tree's position in the viewpoint of the user shifts), the environment-locked virtual object that is locked onto the tree is displayed left-of-center in the viewpoint of the user. In other words, the location and/or position at which the environment locked virtual object is displayed in the viewpoint of the user is dependent on the position and/or orientation of the location and/or object in the environment onto which the virtual object is locked. In some examples, a device uses a stationary frame of reference (e.g., a coordinate system that is anchored to a fixed location and/or object in the physical environment) to determine the position at which to display an environment-locked virtual object in the viewpoint of the user. An environment-locked virtual object can be locked to a stationary part of the environment (e.g., a floor, wall, table, or other stationary object) or can be locked to a moveable part of the environment (e.g., a vehicle, animal, person, or even a representation of portion of the users body that moves independently of a viewpoint of the user, such as a user's hand, wrist, arm, or foot) so that the virtual object is moved as the viewpoint or the portion of the environment moves to maintain a fixed relationship between the virtual object and the portion of the environment.

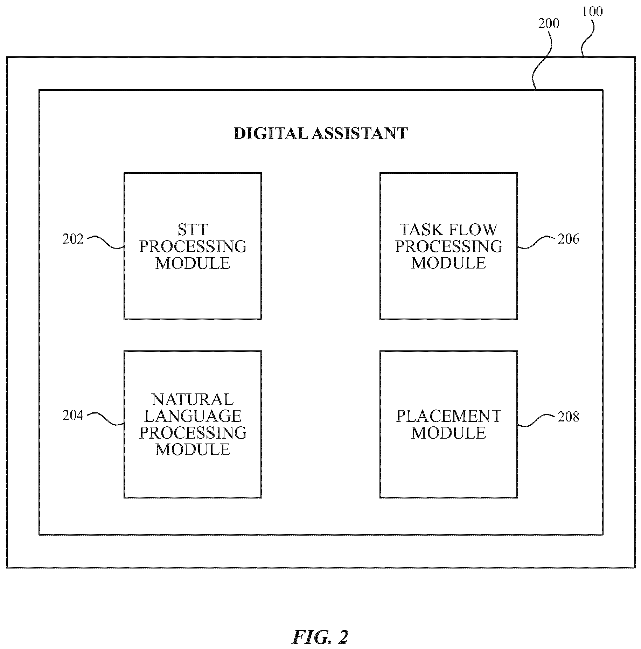

FIG. 2 illustrates a block diagram of a digital assistant (DA), according to various examples.

In some examples, as shown, DA 200 is at least partially implemented within system 100, e.g., within device 100a, 100b, or 100c. For example, DA 200 is at least partially implemented as computer-executable instructions stored in memory(ies) 106. In some examples, DA 200 is distributed across multiple computers and/or systems. For example, some of the modules and functions of DA 200 are divided into a server portion and a client portion, where the client portion resides on one or more user devices (e.g., device 100a, 100b, 100c) or systems (e.g., system 100) and, optionally, communicates with the server portion through one or more networks. The various components and functions of DA 200 are implemented in hardware, software instructions for execution by one or more processors, firmware, including one or more signal processing and/or application specific integrated circuits, or a combination or sub-combination thereof. DA 200 is only one example of a DA, and DA 200 can have more or fewer components than shown, can combine two or more components, or can have a different configuration or arrangement of the components.

In some examples, DA 200 performs at least some of: converting speech input into text; identifying a user's intent expressed in a natural language input received from the user; actively eliciting and obtaining information needed to fully identify the user's intent (e.g., by disambiguating words, names, intentions, etc.); determining a task flow for fulfilling the identified intent; and executing the task flow to fulfill the identified intent.

In some examples, DA 200 includes natural language processing module 204 configured to identify the user intent. Natural language processing module 204 takes the n-best candidate text representation(s) ("word sequence(s)" or "token sequence(s)") generated by speech-to-text (STT) processing module 202 and attempts to associate each of the candidate text representations with one or more "actionable intents" recognized by the DA. An "actionable intent" (or "user intent") represents a task that can be performed by the DA, and can have an associated task flow implemented in task flow processing module 206. The associated task flow is a series of programmed actions and steps that the DA takes in order to perform the task. The scope of a DA's capabilities is, in some examples, dependent on the number and variety of task flows that are implemented in task flow processing module 206, or in other words, on the number and variety of "actionable intents" the DA recognizes.

In some examples, once natural language processing module 204 identifies an actionable intent based on the user request, natural language processing module 204 causes task flow processing module 206 to perform the actions required to satisfy the user request. For example, task flow processing module 206 executes the task flow corresponding to the identified actionable intent to perform a task satisfying the user request. In some examples, performing the task includes causing system 100 to provide graphical, audio, and/or haptic output indicating the performed task.

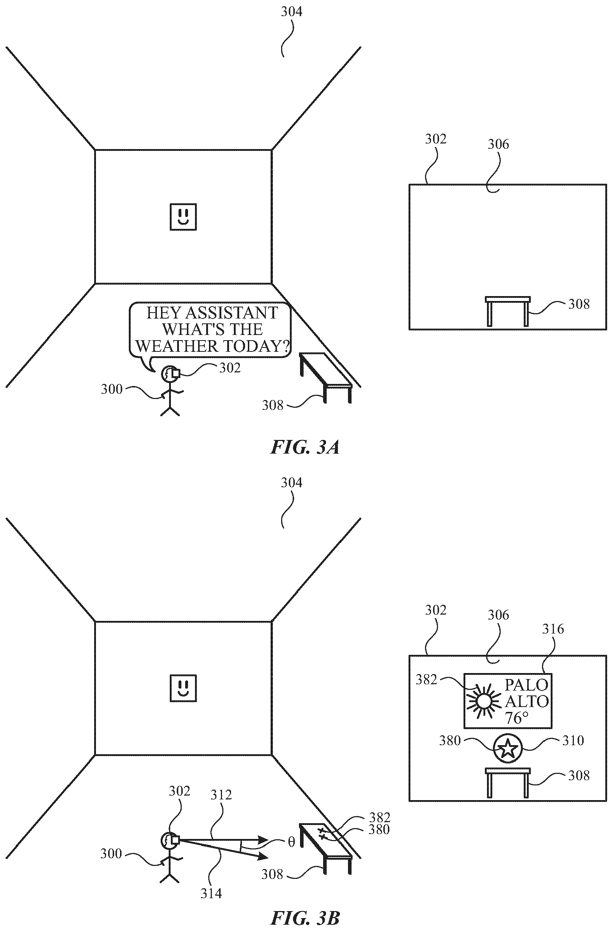

In some examples, DA 200 includes placement module 208. As discussed in detail below with respect to FIGS. 3A-3H, placement module 208 is configured to determine where to place (e.g., display) a representation of DA 200 (e.g., DA indicator 310 in FIGS. 3A-3H below) in an XR environment. Placement module 208 is further configured to cause system 100 to display the representation at the determined location. In some examples, placement module 208 determines the display location based on input received from a user of system 100, e.g., input requesting to move the representation. In some examples, placement module 208 determines the display location based on determining whether a set of criteria (e.g., display criteria) is satisfied.

As described herein, a virtual object is displayed at a particular location (e.g., a physical location or a virtual location) when the device displays the virtual object so that the object appears, to a user, to be located at the particular location. For example, if a device displays a virtual object at a particular location (e.g., on a table) in front of the device, a user perceives that the virtual object is at the particular location, even though the physical elements (e.g., pixels of a display, light projection, and the like) that form the display of the virtual object may not be at that location (e.g., not on the table). Similarly, a virtual object is moved from a first location (e.g., a physical or virtual location) to a second location (e.g., another physical or virtual location) if the device displays the virtual object such that a user initially perceives the virtual object at the first location and then perceives the virtual object at the second location. For example, a virtual object is considered to move from the first location to the second location even though the physical elements that form the display of the virtual object may not have moved from the first location to the second location.

FIGS. 3A-3H illustrate techniques for placing a DA indicator, according to various examples.

FIGS. 3A-3H illustrate user 300 immersed in XR environment 306 provided by device 302. User 300 is in physical environment 304 including a physical table 308. The right panel of FIGS. 3A-3H illustrate user 300's corresponding view of XR environment 306. While the depicted examples show that XR environment 306 includes at least some physical elements (e.g., table 308), in other examples, XR environment 306 is a virtual reality environment entirely composed of virtual elements. For example, table 308 can be a virtual object.

Device 302 is implemented as device 100a or 100c. In the illustrated examples, device 302 is a head mounted device, e.g., a headset, eyeglasses, lenses designed for placement on a user's eyes, and the like. In other examples, device 302 is another type of electronic device such as a smart phone, a tablet device, a laptop computer, or a projection-based device.

Device 302 can provide XR environment 306 in various manners. As one example, device 302 displays at least some of XR environment 306, e.g., via pass-through video of physical environment 304 or by displaying a virtual environment. As another example, device 302 provides XR environment 306 by allowing user 300 to directly view physical environment 304 via a transparent or translucent display of device 302, and optionally, by augmenting physical environment 304 with one or more displayed virtual objects. As yet another example, device 302 is a projection-based device and provides XR environment 306 by projecting one or more virtual objects (e.g., as hologram(s)) onto physical environment 304. Although the below examples describe that device 302 displays virtual objects (e.g., DA indicator 310 and response affordance 316), it will be appreciated that in examples where device 302 is a projection-based device, device 302 can project the virtual objects in an analogous manner.

In FIG. 3A, while providing XR environment 306, device 302 receives an input corresponding to a request to initiate a DA, e.g., DA 200. Examples of such inputs include a spoken trigger input (e.g., a predetermined phrase such as "Hey Assistant" or "Assistant" received by microphone(s) 112), input corresponding to selection of a displayed affordance (e.g., icon), input corresponding to a selection of a hardware button of device 302, and gesture input (e.g., predetermined hand gestures (e.g., waving gestures, pointing gestures, raising gestures, and the like) detected by image sensor(s) 108). In FIG. 3A, user 300 provides the spoken trigger input "Hey Assistant" to device 302.

In some examples, device 302 further receives a natural language input. The natural language input includes a request to the DA. For example, user 300 provides the natural language input "what's the weather today?".

In response to receiving the input corresponding to the request to initiate the DA, device 302 initiates a first instance of a DA session. Initiating a DA session includes initiating (e.g., starting to execute) certain computing processes of the DA, such as processes configured to listen for and to detect an endpoint of a speech input, processes configured to perform automatic speech recognition (e.g., speech-to-text processing) on the speech input, processes configured to perform natural language processing on the speech input, processes configured to cause device 302 to output DA results, processes configured to cause device 302 to display objects (e.g., DA indicator 310 and response affordance 316) associated with the DA, or a combination or sub-combination thereof. Dismissing the DA session therefore includes ceasing to execute such processes and/or ceasing to display objects associated with the DA. In some examples, other processes of the DA are active (e.g., executing) even when a DA session is dismissed. For example, a process configured to detect spoken triggers for initiating a DA session is active when a DA session is dismissed.

Referring to FIG. 3B, initiating an instance of a DA session includes displaying DA indicator 310 at a particular location. For example, as discussed in detail below, placement module 208 determines whether a set of criteria (e.g., display criteria) is satisfied. In accordance with a determination that the set of criteria is satisfied, device 302 displays DA indicator 310 at a first location in XR environment 306. In accordance with a determination that the set of one or more criteria is not satisfied, device 302 displays DA indicator 310 at a different second location (e.g., default location 380) in XR environment 306. As discussed below, the first location can be where a user previously selected to display DA indicator 310.

In FIG. 3B, because user 300 has not previously selected a location for DA indicator 310, placement module 208 determines that the set of criteria is not satisfied. Device 302 thus displays DA indicator 310 at default location 380.

In some examples, default location 380 corresponds to a current front-facing direction 312 of device 302 (and/or of user 300). For example, default location 380 is located along front-facing direction 312 (e.g., vector 312) originating from device 302. As another example, default location 380 is along direction 314 (e.g., vector 314) with the same origin as front-facing direction 312, but with a predetermined angular deviation from direction 312. For example, direction 314 is ±θ degrees directly above or below direction 312, where θ is 5 degrees, 10 degrees, 15 degrees, 20 degrees, or the like. In some examples, default location 380 is located a predetermined distance (e.g., 25 cm, 50 cm, 100 cm, 250 cm, 500 cm, 1 meter, 2 meters) away from user 300 and/or device 302. Accordingly, it will be appreciated that a default location for DA indicator 310 may change based on the current front-facing direction of user 300 and/or device 302.

In some examples, device 302 concurrently displays response affordance 316 with DA indicator 310. Response affordance 316 corresponds to a response generated by the DA based on the natural language input. For example, the DA processes the natural language input "what's the weather today?" as described with respect to FIG. 2 to generate response affordance 316 indicating today's weather information.

In some examples, displaying response affordance 316 includes displaying response affordance 316 above or below (e.g., directly above or directly below) DA indicator 310. In FIG. 3B, device 302 displays response affordance 316 at location 382 directly above location 380. In some examples, displaying response affordance 316 includes orienting response affordance 316 (e.g., orienting the content of response affordance 316) to face user 300 and/or device 302, e.g., for ease of viewing by user 300.

In some examples, response affordance 316 is a world locked virtual object and DA indicator 310 is a world locked virtual object. For example, when displayed in FIG. 3B, DA indicator 310 is locked to default location 380 and response affordance 316 is locked to location 382. As discussed below, in response to receiving an input requesting to move DA indicator 310, device 302 displays DA indicator 310 and/or response affordance 316 at respective new location(s) and causes DA indicator 310 and/or response affordance 316 to be world locked to their respective new location(s).

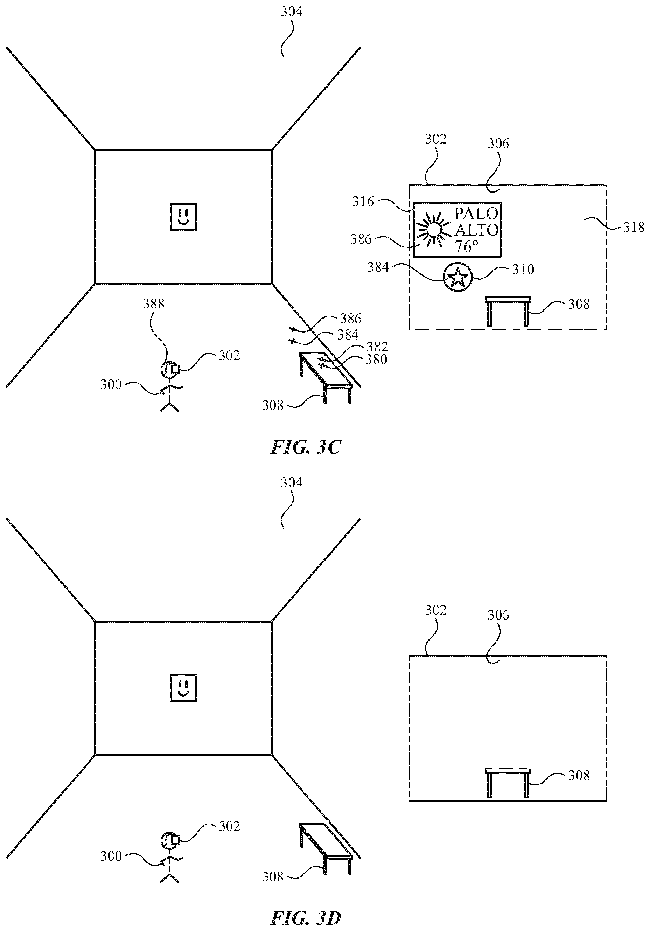

Turning to FIG. 3C, device 302 receives an input corresponding to a request to move DA indicator 310, e.g., from default location 380. The input includes, for instance, a series of gesture inputs (e.g., a first input to select DA indicator 310, a second input to move (e.g., drag) DA indicator 310 to location 384, and a third input to place DA indicator 310 at location 384), a speech input (e.g., "move this to the left of the table"), gaze input, or input received via peripheral device (e.g., a mouse, joystick, or external controller).

In response to receiving the input, device 302 displays DA indicator 310 at location 384, e.g., to the left of table 308 in FIG. 3C. In some examples, moving the display of DA indicator 310 also moves the display of response affordance 316 in a corresponding manner. For example, in FIG. 3C, in response to receiving the input, device 302 displays response affordance 316 at location 386 above location 384 and, optionally, re-orients the display of response affordance 316 to face user 300 and/or device 302. In other examples, moving the display of DA indicator 310 does not move the display of response affordance 316. For example, in response to receiving the input, DA indicator 310 moves to location 384, but response affordance 316 remains at location 382.

In some examples, while providing view 318 of XR environment 306, the first instance of the DA session dismisses. Dismissing the first instance of the DA session includes ceasing to display DA indicator 310, e.g., ceasing to display DA indicator 310 at location 384 in view 318. In some examples, dismissing an instance of a DA session further includes ceasing to display response affordance 316. For example, in FIG. 3D, the first instance of the DA session has dismissed, and device 302 ceases to display both DA indicator 310 and response affordance 316.

In some examples, an instance of a DA session automatically dismisses a predetermined duration (e.g., 10 seconds, 15 seconds, 30 seconds, or 1 minute) after initial display of DA indicator 310 and/or response affordance 316. For example, if device 302 does not receive user input (e.g., speech input, gesture input, and/or gaze input) corresponding to interaction with the DA within the predetermined duration, the instance automatically dismisses when the predetermined duration elapses. In some examples, device 302 receives input requesting to dismiss the DA, and in response, dismisses the instance of the DA session. Such input includes, for example, gesture input, speech input (e.g., "go away"), and/or input to interact with elements in XR environment 306 other than elements associated with the DA (e.g., other than DA indicator 310 and response affordance 316).

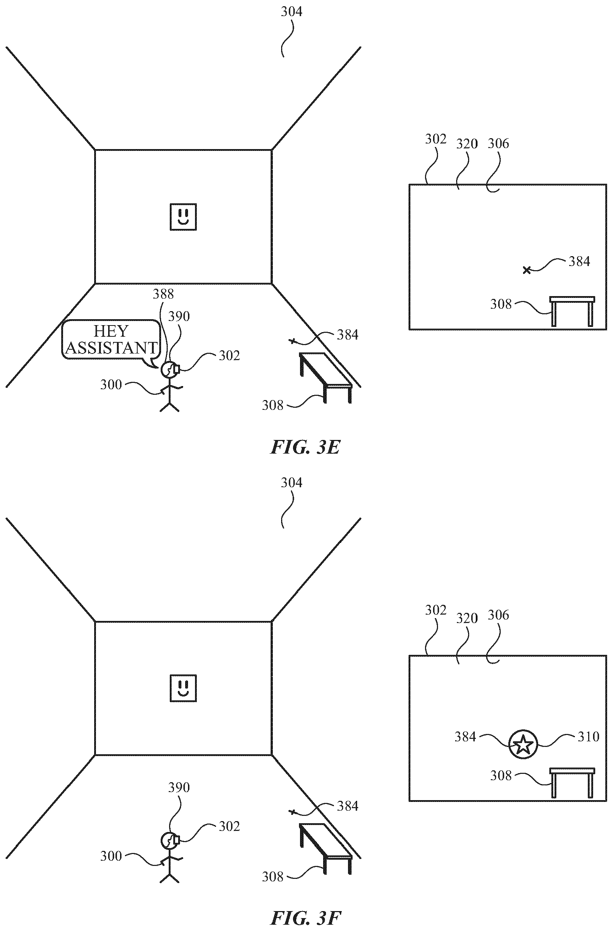

FIG. 3E illustrates that after the first instance of the DA session dismisses, user 300 has changed pose (i.e., position and/or orientation) relative to FIGS. 3C-3D. In particular, user 300 has turned their head to the left, thus causing table 308 to shift rightwards in view 320.

FIG. 3E further illustrates that after dismissing the first instance of the DA session, device 302 receives input (e.g., the spoken trigger "Hey Assistant") corresponding to a request to initiate the DA.

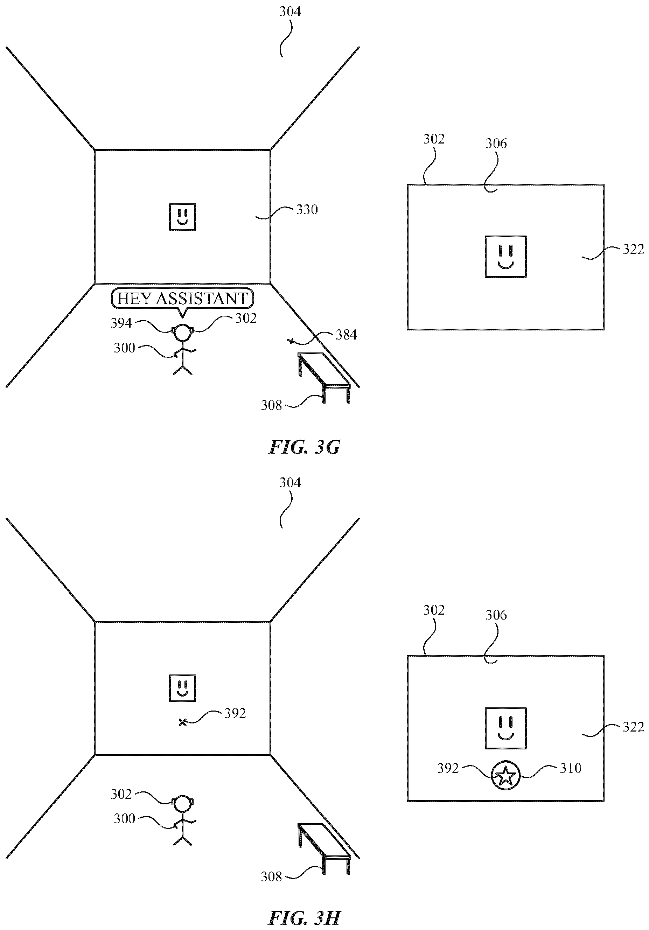

In response to receiving the input and while providing view 320 of XR environment 306, device 302 initiates a second instance of a digital assistant session. As described, initiating an instance of a digital assistant session includes determining whether a set of criteria (e.g., display criteria) is satisfied. In accordance with a determination that the set of criteria is satisfied, device 302 displays DA indicator 310 at previously selected location 384 in view 320. In accordance with a determination that the set of criteria is not satisfied, device 302 displays DA indicator 310 at default location 392 (see FIG. 3H). As described below, determining that the set of criteria are satisfied may indicate that user 300's view 320 has not significantly changed since the last display of DA indicator 310. Thus, device 302 can re-display DA indicator 310 at the same previously selected location 384 for improved DA availability in XR environment 306. For example, as user 300 is likely familiar with location 384, re-displaying DA indicator 310 at location 384 allows the user 300 to quickly locate DA indicator 310 for efficient interaction with the DA. In contrast, determining that the set of criteria are not satisfied may indicate that view 320 has significantly changed since the last display of DA indicator 310. Thus, device 302 can display DA indicator 310 at default location 392 for improved availability of the DA in XR environment 306. For example, view 320 may not include previously selected location 384, or if displayed at location 384, DA indicator 310 may be too far away from user 300 for accurate user interaction (e.g., gesture based interaction or gaze based interaction) with the DA.

In some examples, determining that the set of display criteria are satisfied includes determining view 320 provided by device 302 includes (e.g., depicts) previously selected location 384. Device 302 is at location 388 while the first instance of the DA session dismisses (and/or at location 388 while providing view 318) and device 302 is at location 390 while the second instance of the digital assistant initiates (and/or at location 390 while providing view 320). In some examples, determining that the set of display criteria is satisfied includes determining that locations 388 and 390 are within a threshold distance (e.g., 25 cm, 35 cm, 50 cm, 100 cm, 250 cm, 500 cm, 1 meter, 2 meters, or the like) of each other. In the example depicted in FIG. 3E, locations 388 and 390 are the same (as user 300 wearing device 302 has turned their head from FIGS. 3C-3D but has not moved) and are thus within the threshold distance of each other.

In some examples, determining that the set of display criteria is satisfied includes determining that location 390 of device 302 and previously selected location 384 are within a threshold distance of each other (e.g., 25 cm, 35 cm, 50 cm, 100 cm, 250 cm, 500 cm, 1 meter, 2 meters, or the like). While the above describes considering various locations of device 302, in other examples, device 302 instead considers the corresponding location of user 300 to determine whether the set of display criteria are satisfied. As one example, determining that the set of display criteria are satisfied includes determining that a first location of user 300 while providing view 318 (and/or while the first instance of the DA session dismisses) and a second location of user 300 while providing view 320 (and/or while the second instance of the DA session initiates) are within a threshold distance of each other. As another example, determining that the set of display criteria are satisfied includes determining that the second location of user 300 and previously selected location 384 are within the threshold distance of each other.

Further, while the illustrated examples depict the various locations (e.g., locations 380, 382, 384, 386, and 392) of DA indicator 310 and response affordance 316 each as physical locations, in other examples, the locations are each virtual locations. For example, device 302 provides an virtual reality environment in which user 302 can cause display of DA indicator 310 and response affordance 316. In some examples, to determine whether (physical) location 390 of device 302 (or a physical location of user 300) and a virtual location are within a predetermined distance of each other, device 302 employs a fixed coordinate system where the virtual location of an avatar representing user 300 serves as a proxy for physical location 390 of device 302 (or for the physical location of user 300). Accordingly, to determine whether location 390 (or the physical location of user 300) and previously selected virtual location 384 are within a predetermined distance of each other, device 302 determines whether the virtual location of the avatar and virtual location 384 are within the predetermined distance of each other.

In some examples, determining that the set of criteria are satisfied includes determining that device 302 previously received input corresponding to a request to move DA indicator 310 (e.g., from default location 380). In some examples, determining that the set of criteria are satisfied includes determining that device 302 received the input within a predetermined duration (e.g., 5 minutes, 1 hour, 6 hours, 12 hours, 1 day, or 1 week) before a current time. Thus, in some examples, if device 302 did not receive the input within the predetermined duration before the current time (e.g., user 300 last moved DA indicator 310 a long time ago), the set of criteria is not satisfied.

In some examples, determining whether the set of criteria are satisfied includes determining whether a difference between view 318 and view 320 satisfies a set of criteria. In other words, to determine the display location of DA indicator 310, placement module 208 considers the difference between view 318 (e.g., provided immediately before the DA session was last dismissed) and view 320 (e.g., provided when the DA session reinitiates). In some examples, placement module 208 considers the difference between views 318 and 320 if view 318 includes the display of DA indicator 310. In some examples, determining whether a difference between view 318 and view 320 satisfies the set of criteria includes determining whether the set of display criteria are satisfied, as discussed above.

View 318 depicts XR environment 306 from a first perspective corresponding to a first direction. View 320 depicts XR environment 306 from a second perspective corresponding to a second direction. For example, the first direction (e.g., defined by a first vector) is the front facing direction of user 300 and/or device 302 in FIG. 3C and the second direction (e.g., defined by a second vector) is the front facing direction of user 300 and/or device 302 in FIG. 3E. In some examples, determining that the difference between view 318 and view 320 satisfies the set of criteria includes determining that the difference between the first direction and the second direction is less than a threshold difference. For example, the difference satisfies the set of criteria if the respective directions of the first and second vectors differ by less than a predetermined angular amount, e.g., by 5 degrees, 10 degrees, 15 degrees, 20 degrees, or the like.

View 318 depicts first content of XR environment 306 and view 320 depicts second content of XR environment 306. In some examples, determining that the difference between view 318 and view 320 satisfies the set of criteria includes determining that the second content includes at least a threshold amount (e.g., 100%, 95%, 90%, 85%, 80%, 75%, or the like) of the first content.

In some examples, to determine where to display DA indicator 310, placement module 208 instead determines whether the difference between the view of XR environment 306 provided by device 302 when initially displaying DA indicator 310 at previously selected location 384 and view 320 satisfies the set of criteria, e.g., in a manner analogous to that described above. In some examples, to determine where to display DA indicator 310, placement module 208 instead determines whether the difference between the view of XR environment 306 when DA indicator 310 was last displayed (e.g., in the previous (first) instance of the DA session) and view 320 satisfies the set of criteria, e.g., in a manner analogous to that described above. For example, if view 318 does not include display of DA indicator 310 (e.g., because user 300 changed pose prior to dismissal of the first instance of the DA session), placement module 208 can instead consider the difference between the view of XR environment 306 when DA indicator 310 was last displayed and view 320.

Turning to FIG. 3F, placement module 208 determines that the set of criteria is satisfied. For example, placement module 208 determines that at least some of (or all of) the above-described criteria are satisfied. As a specific example, placement module 208 determines that view 320 includes previously selected location 384 and/or that location 390 of device 302 and location 384 are within a threshold distance of each other. In accordance with such determination(s), device 302 displays DA indicator 310 at previously selected location 384.

FIGS. 3G-3H illustrate an example where placement module 208 determines that the set of criteria are not satisfied and thus causes device 302 to display DA indicator 310 at default location 392.

Turning to FIG. 3G, and continuing from FIG. 3D, after dismissal of the first instance of the DA session, user 300 has moved forward in physical environment 304 and has turned to face front wall 330. Device 302 now has location 394 and thus provides view 322 of XR environment 306.

Device 302 further receives an input (e.g., the spoken trigger "Hey Assistant") corresponding to a request to initiate the DA. In response to receiving the input and while providing view 322, device 302 initiates a second instance of a DA session. In the present example, placement module 208 determines that the set of criteria is not satisfied. For example, placement module 208 determines that some of (or all of) the above-described criteria are not satisfied, e.g., because view 322 does not include (e.g., depict) previously selected location 384 and/or because location 394 and location 384 are not within a threshold distance of each other.

Turning to FIG. 3H, in accordance with a determination that the set of criteria is not satisfied, device 302 displays DA indicator 310 at default location 392 in view 322. For example, as described, default location 392 is defined by a current front facing direction of user 300 and/or device 302 and is located a predetermined distance away from user 300 and/or device 302.

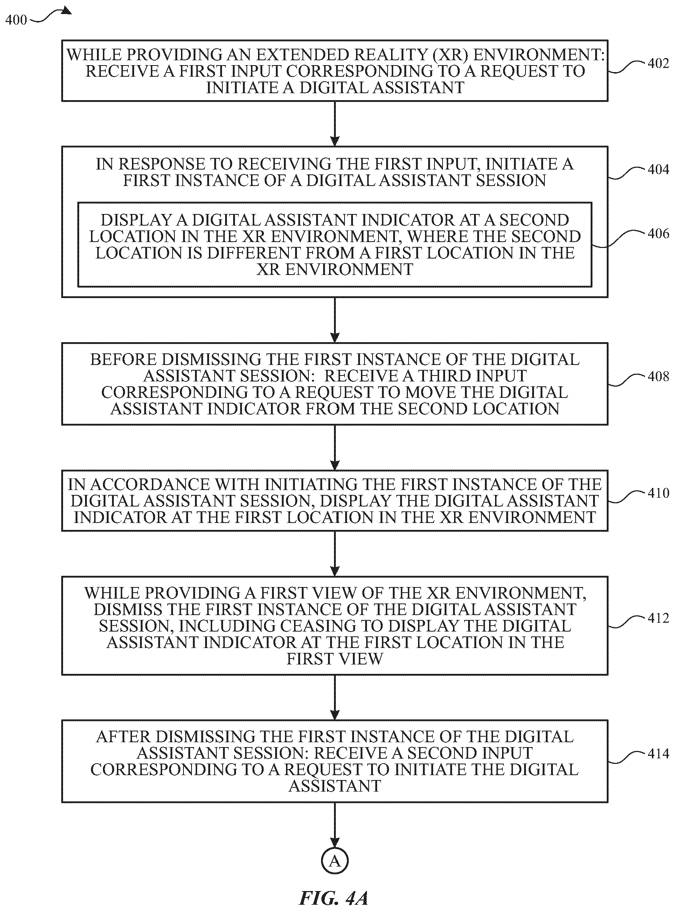

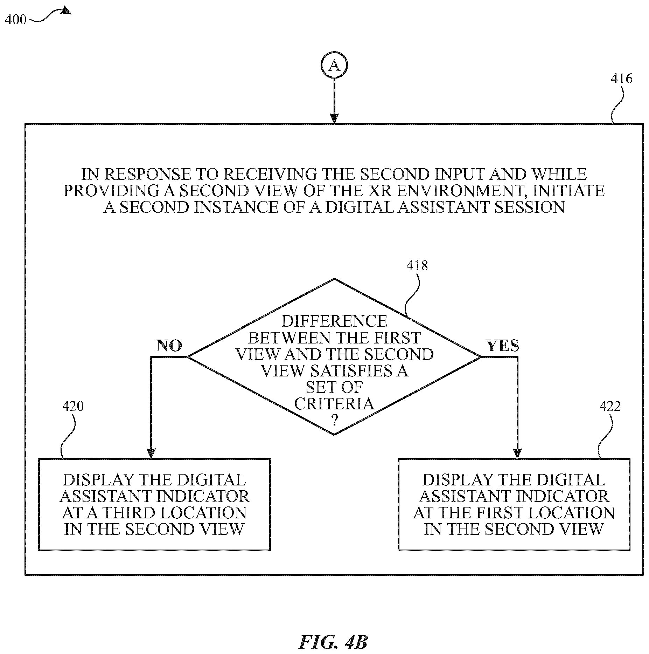

FIGS. 4A-4B illustrate process 400 for placing a digital assistant indicator, according to various examples. Process 400 is performed, for example, at a device (e.g., device 302, device 100a, device 100b, and/or device 100c). In process 400, some operations are, optionally, combined, the orders of some operations are, optionally, changed, and some operations are, optionally, omitted. In some examples, additional operations are performed in combination with process 400.

At block 402, while providing an extended reality (XR) environment (e.g., XR environment 306), a first input corresponding to a request to initiate a digital assistant (e.g., "Hey Assistant" in FIG. 3A) is received. In some examples, the first input includes a spoken trigger for initiating the digital assistant.

At block 404, in response to receiving the first input, a first instance of a digital assistant session is initiated. In some examples, as shown at block 406, initiating the first instance of the digital assistant session includes displaying a digital assistant indicator (e.g., DA indicator 310) at a second location (e.g., default location 380) in the XR environment, where the second location is different from a first location (e.g., location 384) in the XR environment.

In some examples, the second location is a default location. In some examples, the default location corresponds to a current front-facing direction (e.g., direction 312) of the electronic device. In some examples, the default location is located a predetermined distance away from the electronic device (e.g., device 302).

In some examples, at block 408, before dismissing the first instance of the digital assistant session: a third input corresponding to a request to move the digital assistant indicator from the second location (e.g., default location 380) is received.

At block 410, in accordance with initiating the first instance of the digital assistant session, the digital assistant indicator is displayed at the first location (e.g., location 384) in the XR environment. In some examples, the digital assistant indicator is displayed at the first location (e.g., location 384) in response to receiving the third input.

At block 412, while providing a first view of the XR environment (e.g., view 318), the first instance of the digital assistant session is dismissed, including ceasing to display the digital assistant indicator (e.g., DA indicator 310) at the first location in the first view.

In some examples, before dismissing the first instance of the digital assistant session: a natural language input (e.g., "what's the weather today?" in FIG. 3A) is received; and a response affordance (e.g., response affordance 316) is concurrently displayed with the digital assistant indicator (e.g., DA indicator 310), where the response affordance corresponds to a response, generated by the digital assistant, based on the natural language input. In some examples, the digital assistant indicator is world locked and the response affordance is world locked. In some examples, displaying the response affordance includes orienting the response affordance to face the electronic device.

In some examples, initiating the first instance of the digital assistant session includes displaying the digital assistant indicator at a seventh location (e.g., location 380) different from the first location (e.g., location 384). In some examples, before dismissing the first instance of the digital assistant session, the response affordance is displayed at an eighth location (e.g., location 382) above the seventh location. In some examples, process 400 further includes, before dismissing the first instance of the digital assistant session, receiving a fourth input corresponding to a request to move the digital assistant indicator from the seventh location (e.g., location 380) to the first location (e.g., location 384), where the digital assistant indicator is displayed at the first location in response to receiving the fourth input. In some examples, process 400 further includes, before dismissing the first instance of the digital assistant session and in response to receiving the fourth input, displaying the response affordance at a ninth location (e.g., location 386) above the first location. In some examples, dismissing the first instance of the digital assistant session includes ceasing to display the response affordance.

At block 414, after dismissing the first instance of the digital assistant session, a second input (e.g., "Hey Assistant" in FIG. 3E or FIG. 3G) corresponding to a request to initiate the digital assistant is received.

At block 416, in response to receiving the second input and while providing a second view of the XR environment (e.g., view 320 or view 322), a second instance of a digital assistant session is initiated. In some examples, initiating the second instance of the digital assistant session includes determining (e.g., by placement module 208) whether a difference between the first view (e.g., view 318) and the second view (e.g., view 320 or view 322) satisfies a set of criteria, as shown at block 418. At block 420, initiating the second instance of the digital assistant session includes, in accordance with a determination that the difference between the first view and the second view does not satisfy the set of criteria, displaying the digital assistant indicator at a third location (e.g., location 392) in the second view (e.g., view 422). At block 422, initiating the second instance of a digital assistant session includes, in accordance with a determination that a difference between the first view and the second view satisfies a set of criteria, displaying the digital assistant indicator at the first location (e.g., location 384) in the second view (e.g., view 320).

In some examples, the first view depicts the XR environment from a first perspective corresponding to a first direction and the second view depicts the XR environment from a second perspective corresponding a second direction. In some examples, determining that the difference between the first view and the second view satisfies the set of criteria includes determining that a difference between the first direction and the second direction is less than a threshold difference.

In some examples, the first view depicts first content of the XR environment and the second view depicts second content of the XR environment. In some examples, determining that the difference between the first view and the second view satisfies the set of criteria includes determining that the second content includes at least a threshold amount of the first content.

In some examples, the electronic device is at a fourth location (e.g., location 388) while providing the first view and the electronic device is at a fifth location (e.g., location 390 or location 394) while providing the second view. In some examples, determining that the difference between the first view and the second view satisfies the set of criteria includes determining that the fourth location and the fifth location are within a threshold distance of each other.

In some examples, the electronic device is at a sixth location (e.g., location 390 or 394) while providing the second view and determining that the difference between the first view and the second view satisfies the set of criteria includes determining that the sixth location and the first location are within a second threshold distance of each other. In some examples, determining that the difference between the first view and the second view satisfies the set of criteria includes determining that the second view depicts the first location.

The operations discussed above with respect to FIGS. 4A-4B are optionally implemented by the components depicted in FIGS. 1A-1B and 2, e.g., by system 100 and DA 200.

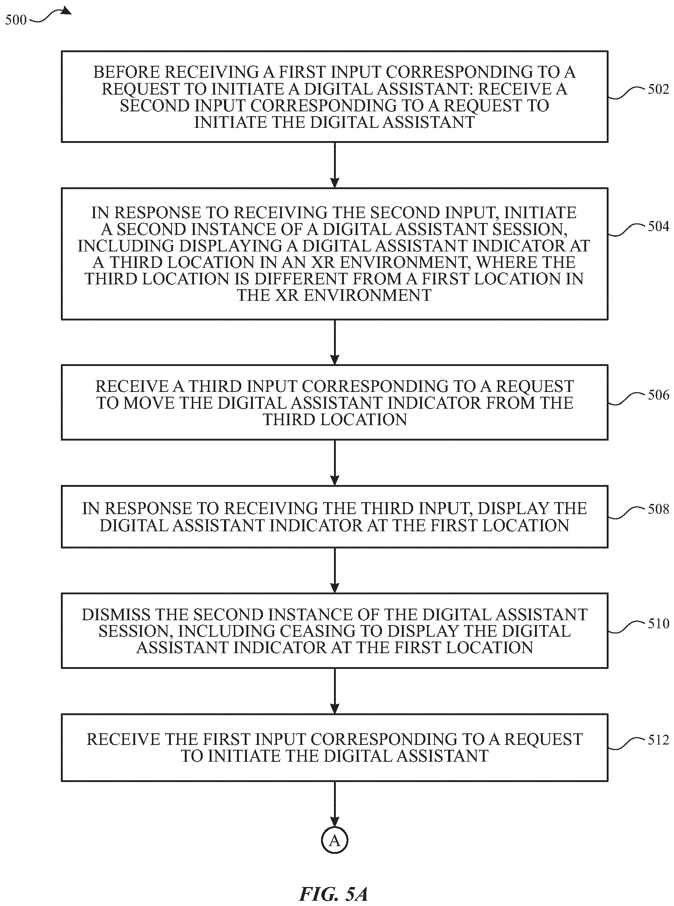

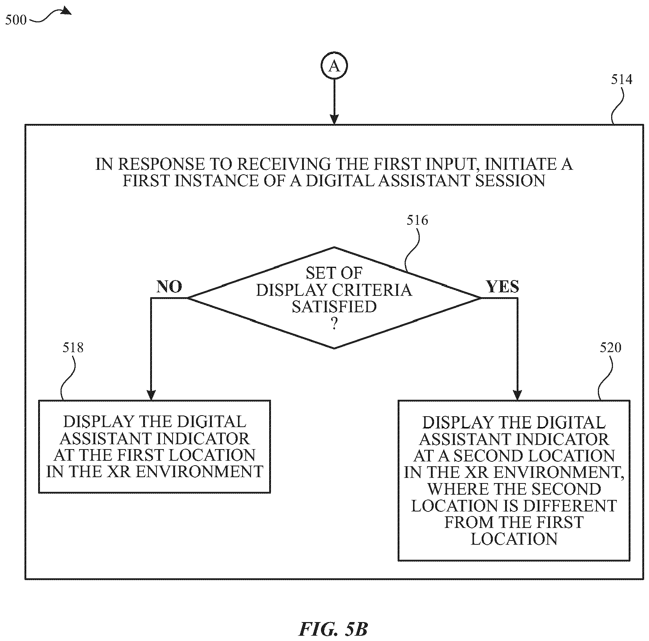

FIGS. 5A-5B illustrate process 500 for placing a digital assistant indicator, according to various examples. Process 500 is performed, for example, at a device (e.g., device 302, device 100a, device 100b, and/or device 100c). In process 500, some operations are, optionally, combined, the orders of some operations are, optionally, changed, and some operations are, optionally, omitted. In some examples, additional operations are performed in combination with process 400.

At block 502, before receiving a first input corresponding to a request to initiate a digital assistant (e.g., "Hey Assistant" in FIG. 3E or 3G), a second input corresponding to a request to initiate the digital assistant (e.g., "Hey Assistant" in FIG. 3A) is received.

At block 504, in response to receiving the second input, a second instance of a digital assistant session is initiated. Initiating the second instance of the digital assistant session includes displaying a digital assistant indicator (e.g., DA indicator 310) at a third location (e.g., location 380) in an XR environment (e.g., XR environment 306), where the third location is different from a first location in the XR environment (e.g., location 384).

At block 506, a third input corresponding to a request to move the digital assistant indicator from the third location is received.

At block 508, in response to receiving the third input, the digital assistant indicator is displayed at the first location.

At block 510, the second instance of the digital assistant session is dismissed, including ceasing to display the digital assistant indicator at the first location, where the first input is received after dismissing the second instance of the digital assistant session. In some examples, the operations of blocks 504, 506, 508, and 510 are performed before receiving the first input.

At block 512, the first input corresponding to a request to initiate a digital assistant (e.g., "Hey Assistant" in FIG. 3A) is received. In some examples, the first input includes a spoken trigger for initiating the digital assistant.

At block 514, in response to receiving the first input, a first instance of a digital assistant session is initiated. In some examples, initiating the first instance of the digital assistant session includes determining (e.g., by placement module 208) whether a set of display criteria is satisfied, as shown in block 516. At block 518, initiating the first instance of the digital assistant session includes in accordance with a determination that the set of display criteria is not satisfied, displaying the digital assistant indicator at a second location in the XR environment (e.g., location 392), where the second location is different from the first location (e.g., location 384). At block 520, initiating the first instance of the digital assistant session includes in accordance with a determination that the set of display criteria is satisfied, displaying the digital assistant indicator at the first location (e.g., location 384) in the XR environment.

In some examples, the second location is a default location. In some examples, the default location corresponds to a current front-facing direction (e.g., direction 312) of the electronic device (e.g., device 302). In some examples, the default location is located a predetermined distance away from the electronic device.

In some examples, the first location (e.g., location 384) is selected by a user (e.g., user 300) before the first instance of the digital assistant session is initiated. In some examples, the first location and the second location are each a physical location in a physical environment (e.g., physical environment 304). In some examples, the first location and the second location are each a virtual location in a virtual environment.

In some examples, the first instance of the digital assistant session is initiated while the electronic device (e.g., device 302) is at a fourth location (e.g., location 390 or location 394). In some examples, the second instance of the digital assistant session is dismissed while the electronic device is at a fifth location (e.g., location 388). In some examples, determining that the set of display criteria is satisfied includes determining that the fourth location and the fifth location are within a threshold distance of each other.

In some examples, determining that the set of display criteria is satisfied includes determining that a current view (e.g., view 320 or view 322) provided by the electronic device includes the first location.

In some examples, determining that the set of display criteria is satisfied includes determining that a current location of the electronic device (e.g., location 390 or location 394) and the first location (e.g., location 384) are within a second threshold distance of each other.

In some examples, a natural language input (e.g., "what's the weather today?" in FIG. 3A) is received. In some examples, a response affordance (e.g., response affordance 316) is concurrently displayed with the digital assistant indicator, where the response affordance corresponds to a response, generated by the digital assistant (e.g., DA 200), based on the natural language input. In some examples, the digital assistant indicator is world locked and the response affordance is world locked. In some examples, displaying the response affordance includes orienting the response affordance to face the electronic device. In some examples, concurrently displaying the response affordance with the digital assistant indicator includes in accordance with the determination that the set of display criteria is satisfied, displaying the response affordance at a sixth location (e.g., location 382) above the first location.

In some examples, a fourth input corresponding to a request to move the digital assistant indicator from the first location to a seventh location (e.g., location 384) is received. In response to receiving the fourth input, the digital assistant indicator is displayed at the seventh location and the response affordance is displayed at an eighth location (e.g., location 386) above the seventh location.

The operations discussed above with respect to FIGS. 5A-5B are optionally implemented by the components depicted in FIGS. 1A-1B and 2, e.g., by system 100 and DA 200.

In some examples, a computer-readable storage medium (e.g., a non-transitory computer readable storage medium) is provided, the computer-readable storage medium storing one or more programs for execution by one or more processors of an electronic device, the one or more programs including instructions for performing any of the methods or processes described herein.

In some examples, an electronic device is provided that comprises means for performing any of the methods or processes described herein.

In some examples, an electronic device is provided that comprises a processing unit configured to perform any of the methods or processes described herein.

In some examples, an electronic device is provided that comprises one or more processors and memory storing one or more programs for execution by the one or more processors, the one or more programs including instructions for performing any of the methods or processes described herein.

As described above, one aspect of the present technology is the gathering and use of data available from various sources to improve the availability of digital assistants in XR environments. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to determine where to place a representation of a digital assistant in an XR environment. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, in the case of determining where to place a representation of a digital assistant, the present technology can be configured to allow users to select to "opt in" or "opt out" of participation in the collection of personal information data during registration for services or anytime thereafter. In another example, users can select not to provide personal data used to determine where to place the representation of the digital assistant. In yet another example, users can select to limit the length of time such data maintained or entirely prohibit personalizing the placement of the representation of the digital assistant. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed examples, the present disclosure also contemplates that the various examples can also be implemented without the need for accessing such personal information data. That is, the various examples of the present technology are not rendered inoperable due to the lack of all or a portion of such personal information data. For example, the device can determine where to place the representation of the digital assistant based on non-personal information data or a bare minimum amount of personal information, such as the current view being provided by the device, other non-personal information available to the digital assistant, or publicly available information.

Exemplary methods, devices, electronic devices, and non-transitory computer-readable storage media are set out in the following items.
1. A method, comprising:
   at an electronic device with one or more processors and memory:
   while providing an extended reality (XR) environment:
   receiving a first input corresponding to a request to initiate a digital assistant;
   in response to receiving the first input, initiating a first instance of a digital assistant session;
   in accordance with initiating the first instance of the digital assistant session, displaying a digital assistant indicator at a first location in the XR environment;
   while providing a first view of the XR environment, dismissing the first instance of the digital assistant session, including ceasing to display the digital assistant indicator at the first location in the first view; and
   after dismissing the first instance of the digital assistant session:
      receiving a second input corresponding to a request to initiate the digital assistant; and
      in response to receiving the second input and while providing a second view of the XR environment, initiating a second instance of a digital assistant session, including:
         in accordance with a determination that a difference between the first view and the second view satisfies a set of criteria, displaying the digital assistant indicator at the first location in the second view.
2. The method of item 1, wherein initiating the first instance of the digital assistant session includes displaying the digital assistant indicator at a second location in the XR environment, wherein the second location is different from the first location.
3. The method of item 2, wherein the second location is a default location.
4. The method of item 3, wherein the default location corresponds to a current front-facing direction of the electronic device.
5. The method of any of items 3-4, wherein the default location is located a predetermined distance away from the electronic device.
6. The method of any of items 2-5, further comprising:
   before dismissing the first instance of the digital assistant session:
   receiving a third input corresponding to a request to move the digital assistant indicator from the second location, wherein the digital assistant indicator is displayed at the first location in response to receiving the third input.
7. The method of any of items 1-6, wherein initiating the second instance of the digital assistant session further includes:
   in accordance with a determination that the difference between the first view and the second view does not satisfy the set of criteria:
   displaying the digital assistant indicator at a third location in the second view.
8. The method of any of items 1-7, wherein:
   the first view depicts the XR environment from a first perspective corresponding to a first direction;
   the second view depicts the XR environment from a second perspective corresponding to a second direction; and
   determining that the difference between the first view and the second view satisfies the set of criteria includes determining that a difference between the first direction and the second direction is less than a threshold difference.
9. The method of any of items 1-8, wherein:
   the first view depicts first content of the XR environment;
   the second view depicts second content of the XR environment; and
   determining that the difference between the first view and the second view satisfies the set of criteria includes determining that the second content includes at least a threshold amount of the first content.
10. The method of any of items 1-9, wherein:
   the electronic device is at a fourth location while providing the first view;
   the electronic device is at a fifth location while providing the second view; and
   determining that the difference between the first view and the second view satisfies the set of criteria includes determining that the fourth location and the fifth location are within a threshold distance of each other.
11. The method of any of items 1-10, wherein:
   the electronic device is at a sixth location while providing the second view; and
   determining that the difference between the first view and the second view satisfies the set of criteria includes determining that the sixth location and the first location are within a second threshold distance of each other.
12. The method of any of items 1-11, wherein:
   determining that the difference between the first view and the second view satisfies the set of criteria includes determining that the second view depicts the first location.
13. The method of any of items 1-12, wherein:
   the first input includes a spoken trigger for initiating the digital assistant.
14. The method of any of items 1-13, further comprising:
   before dismissing the first instance of the digital assistant session:
   receiving a natural language input; and
   concurrently displaying a response affordance with the digital assistant indicator, wherein the response affordance corresponds to a response, generated by the digital assistant, based on the natural language input.
15. The method of item 14, wherein:
   the digital assistant indicator is world locked; and
   the response affordance is world locked.
16. The method of any of items 14-15, wherein:
   displaying the response affordance includes orienting the response affordance to face the electronic device.
17. The method of any of items 14-16, wherein:
   initiating the first instance of the digital assistant session includes displaying the digital assistant indicator at a seventh location different from the first location;
   before dismissing the first instance of the digital assistant session, the response affordance is displayed at an eighth location above the seventh location; and
   the method further comprises:
      before dismissing the first instance of the digital assistant session:
         receiving a fourth input corresponding to a request to move the digital assistant indicator from the seventh location to the first location, wherein the
      digital assistant indicator is displayed at the first location in response to receiving the fourth input; and
         in response to receiving the fourth input, displaying the response affordance at a ninth location above the first location.
18. The method of any of items 14-17, wherein:
   dismissing the first instance of the digital assistant session includes ceasing to display the response affordance.
19. An electronic device, comprising:
   one or more processors;
   a memory; and
   one or more programs, wherein the one or more programs are stored in the memory and configured to be executed by the one or more processors, the one or more programs including instructions for:
      while providing an extended reality (XR) environment:
      receiving a first input corresponding to a request to initiate a digital assistant;
      in response to receiving the first input, initiating a first instance of a digital assistant session;
      in accordance with initiating the first instance of the digital assistant session, displaying a digital assistant indicator at a first location in the XR environment;
      while providing a first view of the XR environment, dismissing the first instance of the digital assistant session, including ceasing to display the digital assistant indicator at the first location in the first view; and
      after dismissing the first instance of the digital assistant session:
         receiving a second input corresponding to a request to initiate the digital assistant; and
         in response to receiving the second input and while providing a second view of the XR environment, initiating a second instance of a digital assistant session, including:
            in accordance with a determination that a difference between the first view and the second view satisfies a set of criteria, displaying the digital assistant indicator at the first location in the second view.
20. A non-transitory computer-readable storage medium storing one or more programs, the one or more programs comprising instructions, which when executed by one or more processors of an electronic device, cause the electronic device to:
   while providing an extended reality (XR) environment:
   receive a first input corresponding to a request to initiate a digital assistant;
   in response to receiving the first input, initiate a first instance of a digital assistant session;
   in accordance with initiating the first instance of the digital assistant session, display a digital assistant indicator at a first location in the XR environment;
   while providing a first view of the XR environment, dismiss the first instance of the digital assistant session, including ceasing to display the digital assistant indicator at the first location in the first view; and
   after dismissing the first instance of the digital assistant session:
      receive a second input corresponding to a request to initiate the digital assistant; and
      in response to receiving the second input and while providing a second view of the XR environment, initiate a second instance of a digital assistant session, including:
         in accordance with a determination that a difference between the first view and the second view satisfies a set of criteria, displaying the digital assistant indicator at the first location in the second view.
21. An electronic device, comprising:
   means, while providing an extended reality (XR) environment, for receiving a first input corresponding to a request to initiate a digital assistant;
   means, while providing the XR environment and in response to receiving the first input, for initiating a first instance of a digital assistant session;
   means, while providing the XR environment and in accordance with initiating the first instance of the digital assistant session, for displaying a digital assistant indicator at a first location in the XR environment;
   means, while providing the XR environment and while providing a first view of the XR environment, for dismissing the first instance of the digital assistant session, including ceasing to display the digital assistant indicator at the first location in the first view; and
   means, while providing the XR environment and after dismissing the first instance of the digital assistant session, for receiving a second input corresponding to a request to initiate the digital assistant; and
   means, while providing the XR environment, after dismissing the first instance of the digital assistant session, in response to receiving the second input, and while providing a second view of the XR environment, for initiating a second instance of a digital assistant session, including:
      in accordance with a determination that a difference between the first view and the second view satisfies a set of criteria, displaying the digital assistant indicator at the first location in the second view.
22. An electronic device, comprising:
   one or more processors;
   a memory; and
   one or more programs, wherein the one or more programs are stored in the memory and configured to be executed by the one or more processors, the one or more programs including instructions for performing the methods of any one of items 1-18.
23. A non-transitory computer-readable storage medium storing one or more programs, the one or more programs comprising instructions, which when executed by one or more processors of an electronic device, cause the electronic device to perform the methods of any one of items 1-18.
24. An electronic device, comprising:
   means for performing the methods of any one of items 1-18.
25. A method, comprising:
   at an electronic device with one or more processors and memory:
   receiving a first input corresponding to a request to initiate a digital assistant; and
   in response to receiving the first input, initiating a first instance of a digital assistant session, including:
      in accordance with a determination that a set of display criteria is satisfied, displaying a digital assistant indicator at a first location in an extended reality (XR) environment; and
      in accordance with a determination that the set of display criteria is not satisfied, displaying the digital assistant indicator at a second location in the XR environment, wherein the second location is different from the first location.
26. The method of item 25, wherein the second location is a default location.
27. The method of item 26, wherein the default location corresponds to a current front-facing direction of the electronic device.
28. The method of any of items 26-27, wherein the default location is located a predetermined distance away from the electronic device.
29. The method of any of items 25-28, wherein:
   the first location is selected by a user before the first instance of the digital assistant session is initiated.
30. The method of any of items 25-29, wherein:
   the first location and the second location are each a physical location in a physical environment.
31. The method of any of items 25-29, wherein:
   the first location and the second location are each a virtual location in a virtual environment.
32. The method of any of items 25-31, further comprising:
   before receiving the first input:
   receiving a second input corresponding to a request to initiate the digital assistant;
   in response to receiving the second input, initiating a second instance of a digital assistant session, including displaying the digital assistant indicator at a third location in the XR environment, wherein the third location is different from the first location;
   receiving a third input corresponding to a request to move the digital assistant indicator from the third location;
   in response to receiving the third input, displaying the digital assistant indicator at the first location; and
   dismissing the second instance of the digital assistant session, including ceasing to display the digital assistant indicator at the first location, wherein the first input is received after dismissing the second instance of the digital assistant session.
33. The method of item 32, wherein:
   the first instance of the digital assistant session is initiated while the electronic device is at a fourth location;
   the second instance of the digital assistant session is dismissed while the electronic device is at a fifth location; and
   determining that the set of display criteria is satisfied includes determining that the fourth location and the fifth location are within a threshold distance of each other.
34. The method of any of items 25-33, wherein determining that the set of display criteria is satisfied includes determining that a current view provided by the electronic device includes the first location.
35. The method of any of items 25-34, wherein determining that the set of display criteria is satisfied includes determining that a current location of the electronic device and the first location are within a second threshold distance of each other.
36. The method of any of items 25-35, further comprising:
   receiving a natural language input; and
   concurrently displaying a response affordance with the digital assistant indicator, wherein the response affordance corresponds to a response, generated by the digital assistant, based on the natural language input.
37. The method of item 36, wherein:
   the digital assistant indicator is world locked; and
   the response affordance is world locked.
38. The method of any of items 36-37, wherein displaying the response affordance includes orienting the response affordance to face the electronic device.
39. The method of any of items 36-38, wherein:
   concurrently displaying the response affordance with the digital assistant indicator includes:
      in accordance with the determination that the set of display criteria is satisfied, displaying the response affordance at a sixth location above the first location; and
   the method further comprises:
      receiving a fourth input corresponding to a request to move the digital assistant indicator from the first location to a seventh location; and
      in response to receiving the fourth input:
         displaying the digital assistant indicator at the seventh location; and
         displaying the response affordance at an eighth location above the seventh location.
40. The method of any of items 25-39, wherein the first input includes a spoken trigger for initiating the digital assistant.
41. An electronic device, comprising:
   one or more processors;
   a memory; and
   one or more programs, wherein the one or more programs are stored in the memory and configured to be executed by the one or more processors, the one or more programs including instructions for:
      receiving a first input corresponding to a request to initiate a digital assistant; and
      in response to receiving the first input, initiating a first instance of a digital assistant session, including:
         in accordance with a determination that a set of display criteria is satisfied, displaying a digital assistant indicator at a first location in an extended reality (XR) environment; and
         in accordance with a determination that the set of display criteria is not satisfied, displaying the digital assistant indicator at a second location in the XR environment, wherein the second location is different from the first location.
42. A non-transitory computer-readable storage medium storing one or more programs, the one or more programs comprising instructions, which when executed by one or more processors of an electronic device, cause the electronic device to:
   receive a first input corresponding to a request to initiate a digital assistant; and
   in response to receiving the first input, initiate a first instance of a digital assistant session, including:
      in accordance with a determination that a set of display criteria is satisfied, displaying a digital assistant indicator at a first location in an extended reality (XR) environment; and
      in accordance with a determination that the set of display criteria is not satisfied, displaying the digital assistant indicator at a second location in the XR environment, wherein the second location is different from the first location.
43. An electronic device, comprising:
   means for receiving a first input corresponding to a request to initiate a digital assistant; and
   means, in response to receiving the first input, for initiating a first instance of a digital assistant session, including:
      in accordance with a determination that a set of display criteria is satisfied, displaying a digital assistant indicator at a first location in an extended reality (XR) environment; and
      in accordance with a determination that the set of display criteria is not satisfied, displaying the digital assistant indicator at a second location in the XR environment, wherein the second location is different from the first location.
44. An electronic device, comprising:
   one or more processors;
   a memory; and
   one or more programs, wherein the one or more programs are stored in the memory and configured to be executed by the one or more processors, the one or more programs including instructions for performing the methods of any one of items 25-40.
45. A non-transitory computer-readable storage medium storing one or more programs, the one or more programs comprising instructions, which when executed by one or more processors of an electronic device, cause the electronic device to perform the methods of any one of items 25-40.
46. An electronic device, comprising:
   means for performing the methods of any one of items 25-40.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method, comprising:
at an electronic device with one or more processors and memory:
while providing an extended reality (XR) environment:
receiving a first input corresponding to a request to initiate a digital assistant;
in response to receiving the first input, initiating a first instance of a digital assistant session;
in accordance with initiating the first instance of the digital assistant session, displaying a digital assistant indicator at a first location in the XR environment;
while providing a first view of the XR environment, dismissing the first instance of the digital assistant session, including ceasing to display the digital assistant indicator at the first location in the first view; and
after dismissing the first instance of the digital assistant session:
receiving a second input corresponding to a request to initiate the digital assistant; and
in response to receiving the second input and while providing a second view of the XR environment, initiating a second instance of a digital assistant session, including:
in accordance with a determination that a difference between the first view and the second view satisfies a set of criteria, displaying the digital assistant indicator at the first location in the second view.

2. The method of claim 1, wherein initiating the first instance of the digital assistant session includes displaying the digital assistant indicator at a second location in the XR environment, wherein the second location is different from the first location.

3. The method of claim 2, wherein the second location is a default location.

4. The method of any of claims 2-3, further comprising:
before dismissing the first instance of the digital assistant session:
receiving a third input corresponding to a request to move the digital assistant indicator from the second location, wherein the digital assistant indicator is displayed at the first location in response to receiving the third input.

5. The method of any of claims 1-4, wherein initiating the second instance of the digital assistant session further includes:
in accordance with a determination that the difference between the first view and the second view does not satisfy the set of criteria:
displaying the digital assistant indicator at a third location in the second view.

6. The method of any of claims 1-5, wherein:
the first view depicts the XR environment from a first perspective corresponding to a first direction;
the second view depicts the XR environment from a second perspective corresponding to a second direction; and
determining that the difference between the first view and the second view satisfies the set of criteria includes determining that a difference between the first direction and the second direction is less than a threshold difference.

7. The method of any of claims 1-6, wherein:
the first view depicts first content of the XR environment;
the second view depicts second content of the XR environment; and
determining that the difference between the first view and the second view satisfies the set of criteria includes determining that the second content includes at least a threshold amount of the first content.

8. The method of any of claims 1-7, wherein:
the electronic device is at a fourth location while providing the first view;
the electronic device is at a fifth location while providing the second view; and
determining that the difference between the first view and the second view satisfies the set of criteria includes determining that the fourth location and the fifth location are within a threshold distance of each other.

9. The method of any of claims 1-8, wherein:
the electronic device is at a sixth location while providing the second view; and
determining that the difference between the first view and the second view satisfies the set of criteria includes determining that the sixth location and the first location are within a second threshold distance of each other.

10. The method of any of claims 1-9, wherein:
determining that the difference between the first view and the second view satisfies the set of criteria includes determining that the second view depicts the first location.

11. The method of any of claims 1-10, further comprising:
before dismissing the first instance of the digital assistant session:
receiving a natural language input; and
concurrently displaying a response affordance with the digital assistant indicator, wherein the response affordance corresponds to a response, generated by the digital assistant, based on the natural language input.

12. The method of claim 11, wherein:
the digital assistant indicator is world locked; and
the response affordance is world locked.

13. The method of any of claims 11-12, wherein:
initiating the first instance of the digital assistant session includes displaying the digital assistant indicator at a seventh location different from the first location;
before dismissing the first instance of the digital assistant session, the response affordance is displayed at an eighth location above the seventh location; and
the method further comprises:
before dismissing the first instance of the digital assistant session:
receiving a fourth input corresponding to a request to move the digital assistant indicator from the seventh location to the first location, wherein the digital assistant indicator is displayed at the first location in response to receiving the fourth input; and
in response to receiving the fourth input, displaying the response affordance at a ninth location above the first location.

14. An electronic device, comprising:
one or more processors;
a memory; and
one or more programs, wherein the one or more programs are stored in the memory and configured to be executed by the one or more processors, the one or more programs including instructions for performing the methods of any one of claims 1-13.

15. A computer-readable storage medium storing one or more programs, the one or more programs comprising instructions, which when executed by one or more processors of an electronic device, cause the electronic device to perform the methods of any one of claims 1-13.
